# EUROPEAN PATENT APPLICATION

(11) **EP 3 370 141 A1**
(43) Date of publication of application: **05.09.2018**
(21) Application number: 18157573.9
(22) Date of filing: 20.02.2018
(51) Int. Cl.: G06F 3/0488, G06F 3/0484, G06F 3/0482

(54) **DISPLAY DEVICE AND CONTROL PROGRAM OF DISPLAY DEVICE**

(30) Priority: 02.03.2017 JP 2017039438
(71) Applicant: Onkyo Corporation, Osaka 572-0028 (JP)
(72) Inventor: OKA, Aiko, Neyagawa-shi, Osaka 572-0028 (JP); TADA, Tokinori, Neyagawa-shi, Osaka 572-0028 (JP)
(74) Representative: Horn Kleimann Waitzhofer Patentanwälte PartG mbB

(57) **Abstract**

Problem: To be able to move items in a display device of which a display area is narrow.

Solution: A DAP 1 includes a display section 4, a touch panel 51, and an SoC 2. The SoC 2 displays titles by list in the display section 4. When the SoC 2 receives contact to the title by the touch panel 51, it displays menu which is for moving the title in the display section 4. The menu includes an up arrow button which is for moving the title to a previous row and a down arrow button which is for moving the title a next row.

## Description

### TECHNICAL FIELD

The present invention relates to a display device that displays items such as titles of songs by list and a control program of the display device.

### BACKGROUND ART

In a digital audio player (hereinafter, referred as to "DAP") which reproduces music, an LCD (Liquid Crystal Display) is used as a display section. When the DAP becomes small, the LCD becomes small and sufficient display area cannot be obtained. Further, there is a case where the DAP includes a touch panel which is linked with the LCD. When spec of an OS (Operation System) of the DAP is low, the DAP cannot receive elaborate operation of the touch panel. Meanwhile, sorting of songs in playlist which is displayed based on music database (DB) needs to be performed by user operation. However, because of the above described limitation, it is difficult that user obtains the same operation feeling as a smartphone and a table PC.

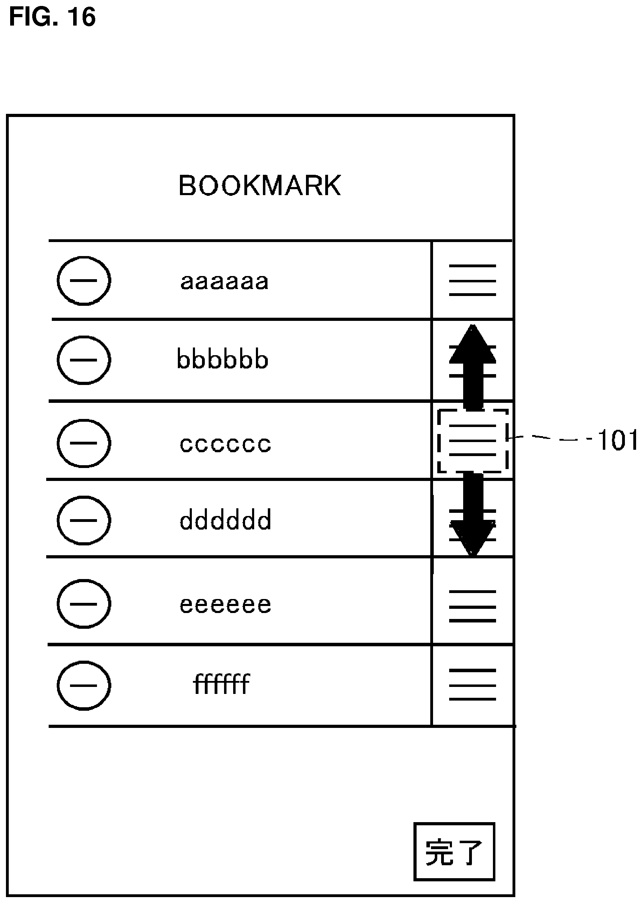

Concretely, in case of the smartphone and the tablet PC, as illustrated in Fig. 16, specification that an edit mode activates when displaying list, the user drags and drops a sorting button 101 up and down, and the user can move an item to optional position is often adopted. In JP 2009-157800 A, an invention that songs can be moved by mouse drag and drop is disclosed. However, in the small DAP, because of narrowness of display area, it is difficult to arrange the sorting button of which size can be dragged and dropped. Further, it is difficult that drag and drop with animation is performed comfortably.

Further, as one of methods without using animation such as slide and operation such as drug and drop, it is a common method to enter an editing mode once and to change the order of each line one by one with a fixed up and down button 102. However, it is difficult for the user to understand movement of the items because display area of text is narrow and there is high possibility that similar items (for example, song name, album name or the like) are lined up in the DAP. Further, slide movement display which is for expressing movement is difficult in terms of specification.

### PRIOR ART DOCUMENT

### PATENT LITERATURE

PATENT LITERATURE 1: JP 2009-157800 A

### SUMMARY OF THE INVENTION

### PROBLEM TO BE RESOLVED BY THE INVENTION

As described above, it is difficult to move the items by drug and drop in the small DAP. Further, it is difficult to use animation which expresses movement visually.

An objective of the present disclosure is to be able to move items in a display device of which display area is narrow.

### MEANS FOR SOLVING THE PROBLEM

A display device of a first invention comprising: a display section; a touch panel; and a controller, wherein the controller displays items by list, and displays a menu that is for moving the item on the display section when it receives contact to the item by the touch panel.

In the present invention, when a controller receives contact to an item by a touch panel, it displays a menu that is for moving the item on a display section. Thus, the controller can receive contact to the menu by the touch panel and move the item. Therefore, according to the present invention, the item can be moved even if display area is small in a display device. Further, according to the present invention, the item can be moved by not using drag and drop, and animation.

The display device of a second invention is the display device of the first invention, wherein the controller displays the menu on the item.

The display device of a third invention is the display device of the second invention, wherein the controller displays the menu on another row of the item.

The display device of a fourth invention is the display device of the third invention, wherein the controller displays the menu on a next row of the item.

The display device of a fifth invention is the display device of any one of the first to the fourth inventions, wherein the controller displays the menu including a first button that is for moving the item to a previous row and a second button that is for moving the item to a next row on the display section.

The display device of a six invention is the display device of the fifth invention, wherein the controller changes display mode of the first button when the item that contact is received is a first row.

In the present invention, when an item that contact is received is a first row, the controller changes display mode of a first button. Herein, "change of display mode" means to change the display mode to display mode which indicates not to receive contact of the first button. For example, change of display mode includes not to display the first button, to gray out the first button, to display oblique line (/ or \) on the first button, display "X" on the first button and so on. As described above, the user understands that the first button cannot be selected because display mode of the first button is changed.

The display device of a seventh invention is the display device of the fifth or the six invention, wherein the controller changes display mode of the second button when the item that contact is received is a last row.

In the present invention, when the item that contact is received is a last row, the controller changes display mode of a second button. Herein, "change of display mode" means to change the display mode to the display mode which indicates not to receive contact of the second button. For example, change of display mode includes not to display the second button, to gray out the second button, to display oblique line (/ or \) on the second button, display "X" on the second button and so on. As described above, the user understands that the second button cannot be selected because display mode of the second button is changed.

The display device of an eighth invention is the display device of any one of the fifth to the seventh inventions, wherein the controller moves the item to a previous row when it receives contact to the first button.

The display device of a ninth invention is the display device of the eighth invention, wherein the controller moves the menu to a previous row in addition to the item when it receives contact to the first button.

The display device of a tenth invention is the display device of the eighth or the ninth invention, wherein the controller displays error when it receives contact to the first button and the item is a first row.

The display device of an eleventh invention is the display device of any one of the fifth to the seventh inventions, wherein the controller moves the item to a next row when it receives contact to the second button.

The display device of a twelfth invention is the display device of any one of the fifth to the seventh inventions, wherein the controller moves the menu to a next row in addition to the item when it receives contact to the second button.

The display device of a thirteenth invention is the display device of the eleventh or the twelfth inventions, wherein the controller displays error when it receives contact to the second button and the item is a last row.

A control program of a display device of a fourteenth invention which comprises a display section, a touch panel, and a controller,
wherein the control program allows the controller to display items by list, and to display a menu that is for moving the item on the display section when the controller receives contact to the item by the touch panel.

### EFFECT OF THE INVENTION

According to the present disclosure, the item can be moved in a display device of which display area is narrow.

### BRIEF DESCRIPTION OF THE DRAWINGS

Fig. 1 is a block diagram illustrating a configuration of a digital audio player according to an embodiment of the present disclosure.
Fig. 2 is a diagram illustrating a display screen that displays a playlist (first embodiment).
Fig. 3 is a diagram illustrating the display screen that displays the playlist (first embodiment).
Fig. 4 is a diagram illustrating the display screen that displays the playlist (first embodiment).
Fig. 5 is a diagram illustrating the display screen that displays the playlist (first embodiment).
Fig. 6 is a diagram illustrating the display screen that displays the playlist (first embodiment).
Fig. 7 is a diagram illustrating the display screen that displays the playlist (first embodiment).

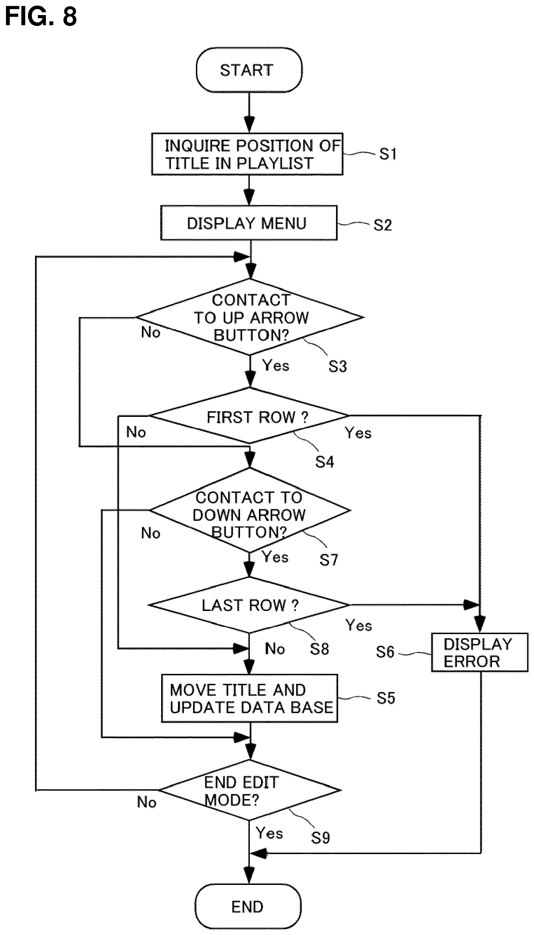

Fig. 8 is a flow chat illustrating processing operation in the case where the digital audio player edits the playlist (first embodiment).
Fig. 9 is a diagram illustrating the display screen that displays the playlist (second embodiment).
Fig. 10 is a diagram illustrating the display screen that displays the playlist (second embodiment).
Fig. 11 is a diagram illustrating the display screen that displays the playlist (second embodiment).
Fig. 12 is a diagram illustrating the display screen that displays the playlist (second embodiment).
Fig. 13 is a diagram illustrating the display screen that displays the playlist (second embodiment).
Fig. 14 is a flowchart illustrating processing operation of a digital audio player in the case where the digital audio player edits the playlist (second embodiment).
Fig. 15 is a flowchart illustrating processing operation of a digital audio player in the case where the digital audio player edits the playlist (second embodiment).
Fig. 16 is a diagram illustrating a display screen that displays items by list.

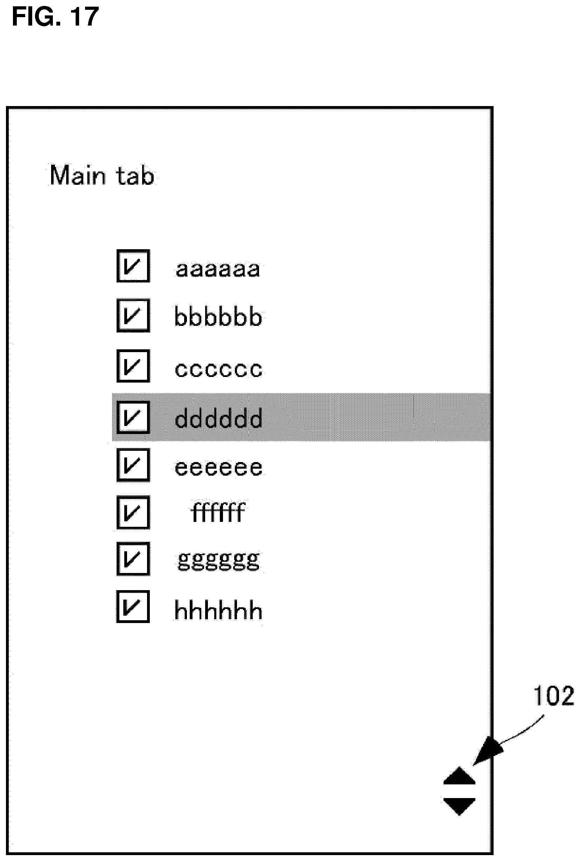

Fig. 17 is a diagram illustrating a display screen that displays items by list.

### DESCRIPTION OF THE EMBODIMENTS

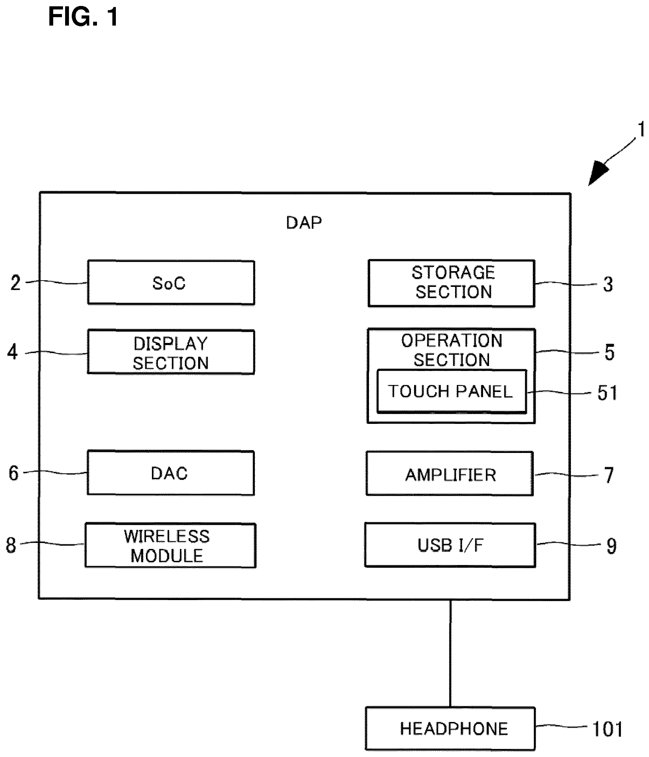

An embodiment of the present invention is described below. Fig. 1 is a block diagram illustrating a configuration of a digital audio player according to an embodiment of the present disclosure. The digital audio player (hereinafter, referred as to "DAP") 1 outputs analog audio data to a headphone 101. The headphone 101 outputs an audio to external based on analog audio data.

As illustrated in Fig. 1, the DAP 1 (display device) includes an SoC (System on Chip) 2, a storage section 3, a display section 4, an operation section 5, a D/A convertor (hereinafter, referred as to "DAC") 6, an amplifier 7, a wireless module 8, and a USB interface (hereinafter, referred as to "USB I/F") 9.

The SoC 2 (controller) has a CPU (Central Processing Unit), a DSP (Digital Signal Processor), and a memory, and controls respective sections composing the DAP 1. The storage section 3 is composed of a flash memory that stores programs such as an OS program and application programs and various data such as digital audio data. The storage section 3 is not limited to the illustrated configuration, and may be an HDD (Hard Disk Drive).

The display section 4 displays various images (include still images and moving images), and is composed of a liquid crystal panel. The operation section 5 has operation keys for performing various settings, and a touch panel that is linked with the display section 4. A user can perform various characters input and setting via the operation section 5.

The SoC 2 outputs digital audio data in I2S system to the DAC 6. The DAC 6 D/A-converts digital audio data to analog audio data. Analog audio data from the DAC 6 is input to the amplifier 7. The amplifier 7 amplifies the analog audio data that the DAC 6 D/A-converts and outputs amplified analog audio data to the headphone 101.

The wireless module 10 is for performing wireless communication according to Bluetooth (registered trademark) standard and Wi-Fi standard. The USB I/F 11 is for performing communication according to USB standard.

### (First embodiment)

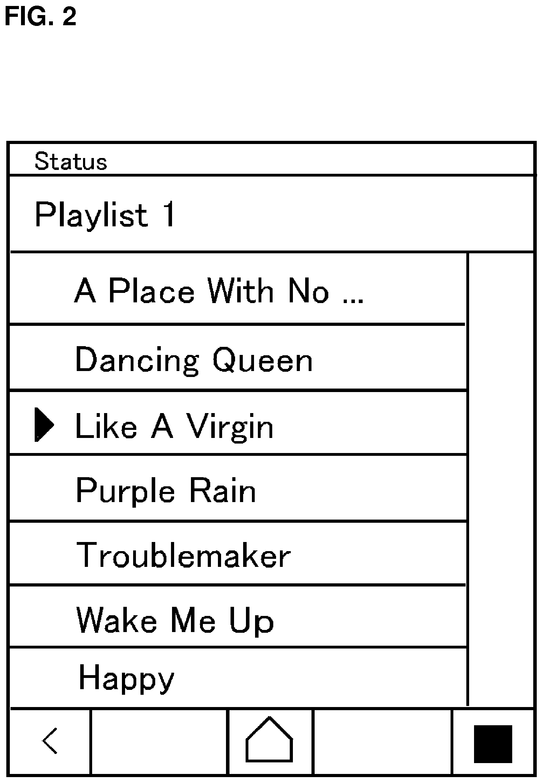

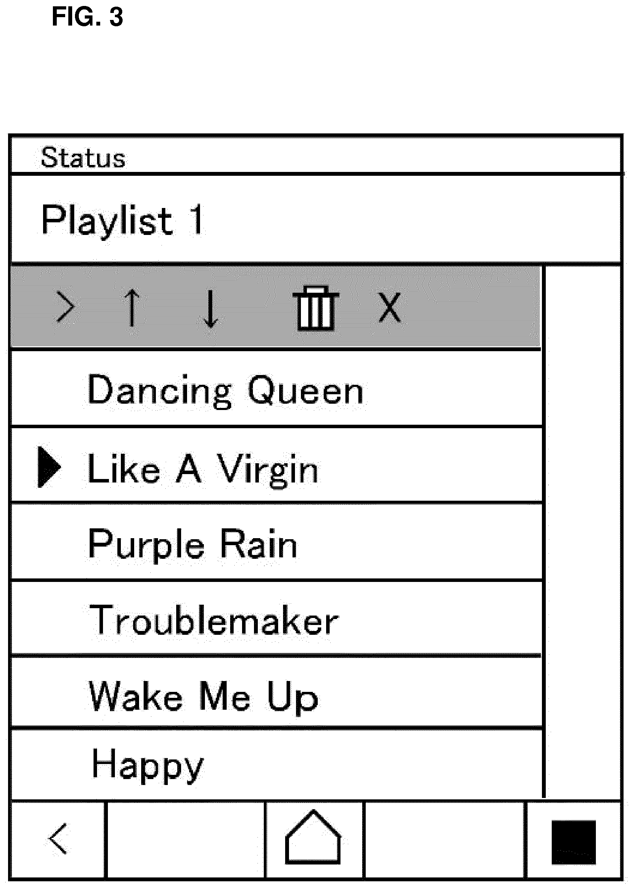

Fig. 2 is a diagram illustrating display screen that displays a playlist. As illustrated in Fig. 2, the SoC 2 displays titles (items) of songs as the playlist on the display section 4. When the SoC 2 receives contact to the title, it enters into edit mode and as illustrated in Fig. 3, it displays a menu that is for moving the title on the display section 4. Concretely, the SoC 2 displays the menu including an up arrow button (first button) that is for moving the title to a previous row and a down arrow button (second button) that is for moving the title to a next row on the display section 4. In the present embodiment, the SoC 2 displays the menu on the title. In other words, the SoC 2 displays the menu to overlap the title. Further, the SoC 2 displays a garbage can button that is for deleting the song and an X button that is for ending the edit mode on the display section 4. In Fig. 3, the title is displayed not to be seen but may be displayed to be seen through. Left side of the title is touched and the song of the title is played back. Right side of the title is touched and the edit mode is activated.

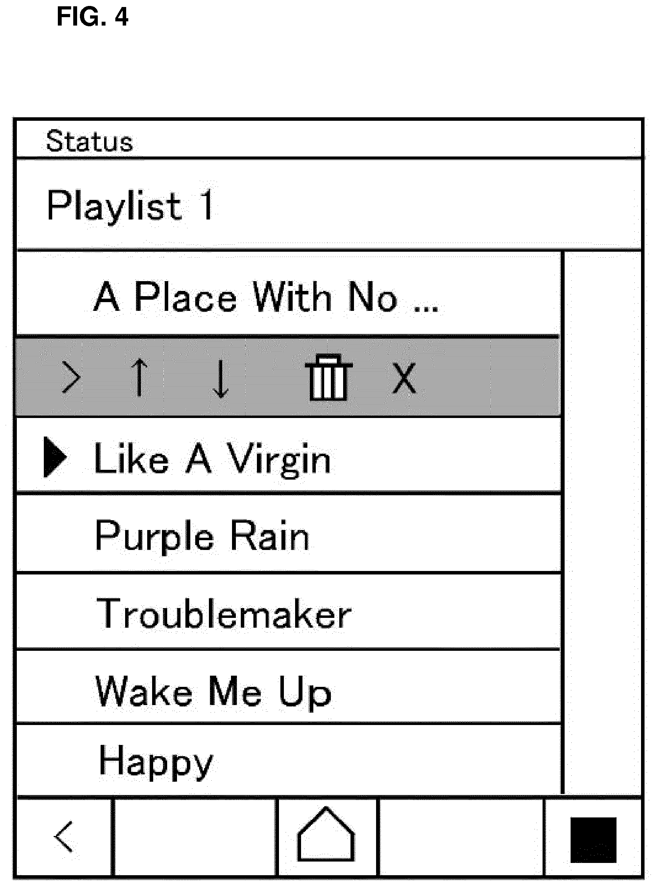

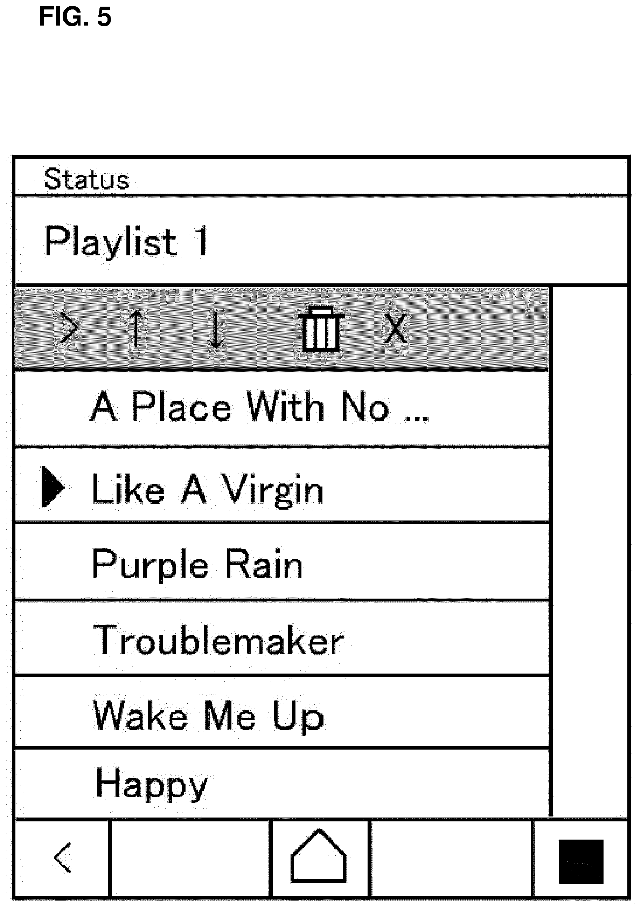

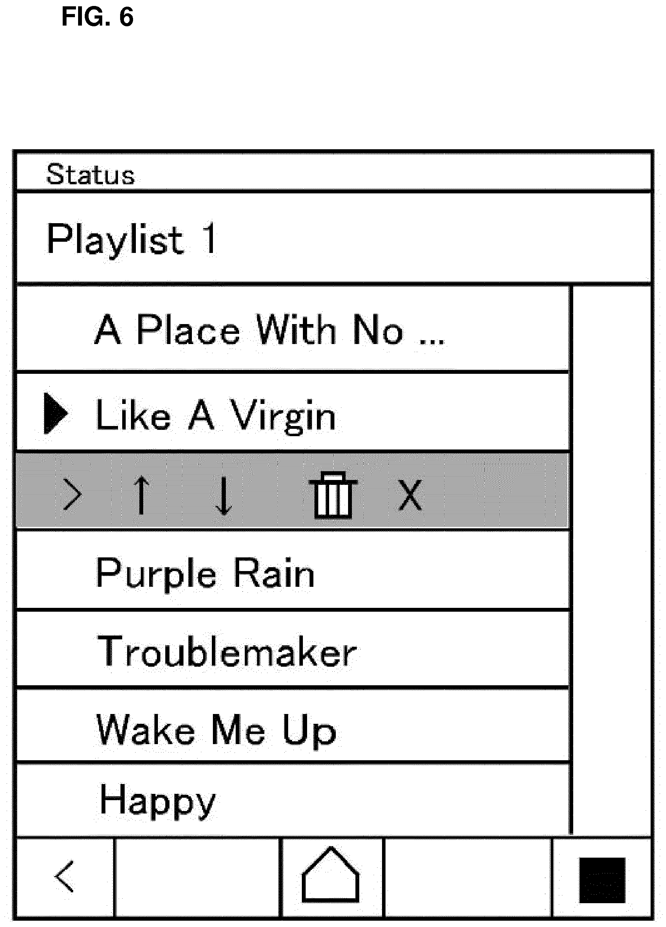

In Fig. 3, the menu is displayed on the title (A Place With No ...) of a first row. In Fig. 4, the menu is displayed on the title (Dancing Queen) of a second row. In state that is illustrated in Fig. 4, when the SoC 2 receives contact to the up arrow button, as illustrated in Fig. 5, it moves the title to a previous row. At this time, the SoC 2 moves the menu to the previous row. In state that is illustrated in Fig. 4, the SoC 2 receives contact to the down arrow button, as illustrated in Fig. 6, it moves the title to a next row. At this time, the SoC 2 moves the menu to the next row.

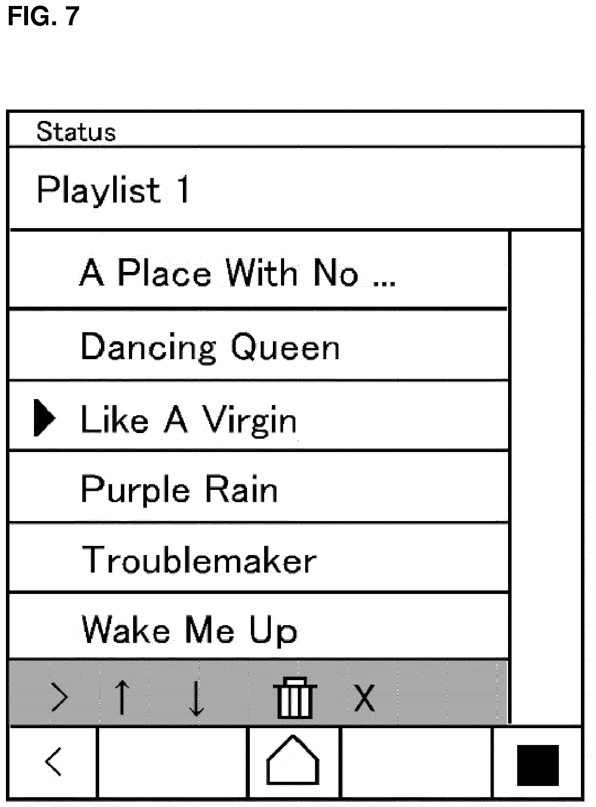

In a state that is illustrated in Fig. 2, when the SoC 2 receives contact to the up arrow button, it displays error because the title is the first row and it cannot be moved. Further, in a state that is illustrated in Fig. 7, when the SoC 2 receives contact to the down arrow button, it displays error because the title is the last row and cannot be moved.

In the edit mode illustrated in Fig. 3 and Fig. 4, when the SoC 2 receives contact to the X button or margin, as illustrated in Fig. 2, it ends the edit mode.

Processing operation in the case where the DAP 1 edits the playlist is described below. The SoC 2 performs the following processing according to a GUI module. When the SoC 2 receives selection of the edit mode, namely, receives contact to the title, it inquires position of the title in the playlist to a music DB (S1). Herein, the music DB is a database that is for managing songs that are stored in the storage section 3. The music DB is stored in the storage section 3.

Next, the SoC 2 displays the menu on the title (S2). The SoC 2 judges whether it receives contact to the up arrow button or not (S3). When the SoC 2 judges that it receives contact to the up arrow button (S3: Yes), it judges whether the title is the first row or not (S4). When the SoC 2 judges that the title is not the first row (S4: Yes), it moves the title to the previous row and updates the music DB (S5). On the other hand, when the SoC 2 judges that the title is the first row (S4: Yes), it displays error (S6).

When the SoC 2 judges that it does not receives contact to the up arrow button (S3: No), it judges whether it receives contact to the down arrow button or not (S7). When the SoC 2 judges that it receives contact to the down arrow button (S7: Yes), it judges whether the title is a last row or not (S8). When the SoC 2 judges that the title is not the last row (S8: No), it moves the title to the next row and updates the music DB (S5). On the other hand, when the SoC 2 judges that the title is the last row (S8: Yes), it displays error (S6).

When the SoC 2 judges that it does not receive contact to the down arrow button (S7: No), or after processing of S5, it judges whether it receives contact to the X button or contact to the margin and ends the edit mode or not (S9). When the SoC 2 judges that it does not end the edit mode (S9: No), it performs processing of S3. When the SoC 2 judges that it ends the edit mode (S9: Yes), it ends processing.

### (Second embodiment)

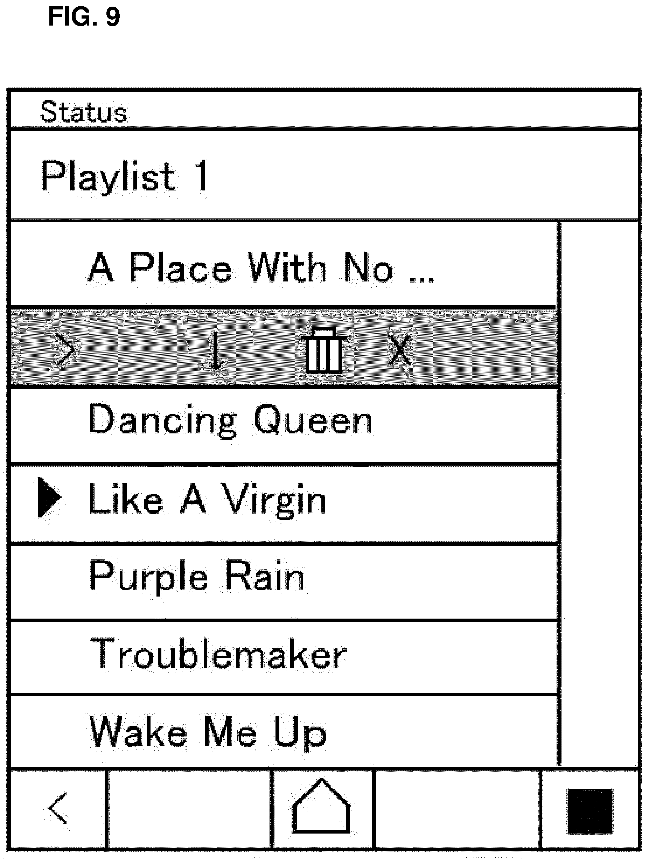

In the first embodiment, as illustrated in Fig. 3 to Fig. 7, the SoC 2 displays the menu on the title. In second embodiment, as illustrated in Fig. 9, the SoC 2 displays the menu on a next row of the title. In other words, the SoC 2 displays the menu not to overlap the title. In Fig. 9, the title (A Place With No ...) of the first row is a movement object. Further, when the title is the first row, the SoC 2 does not display the up arrow button. It is because that the title cannot be moved since the title is the first row.

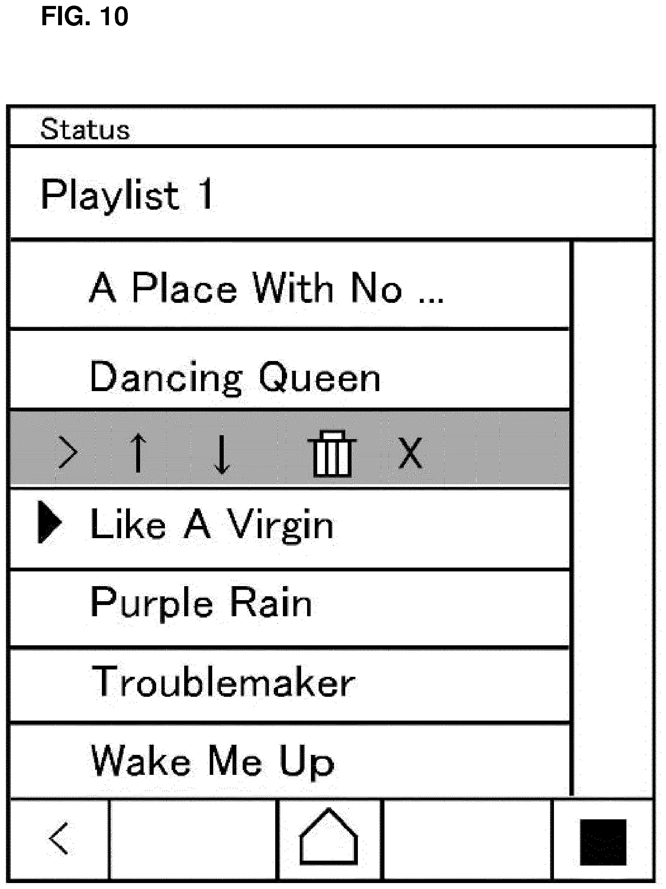

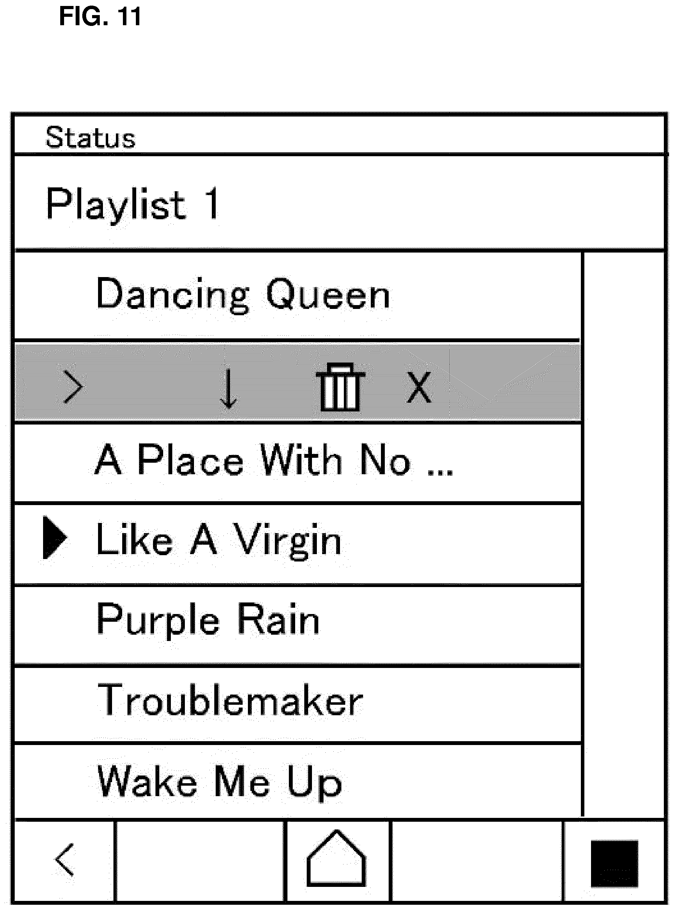

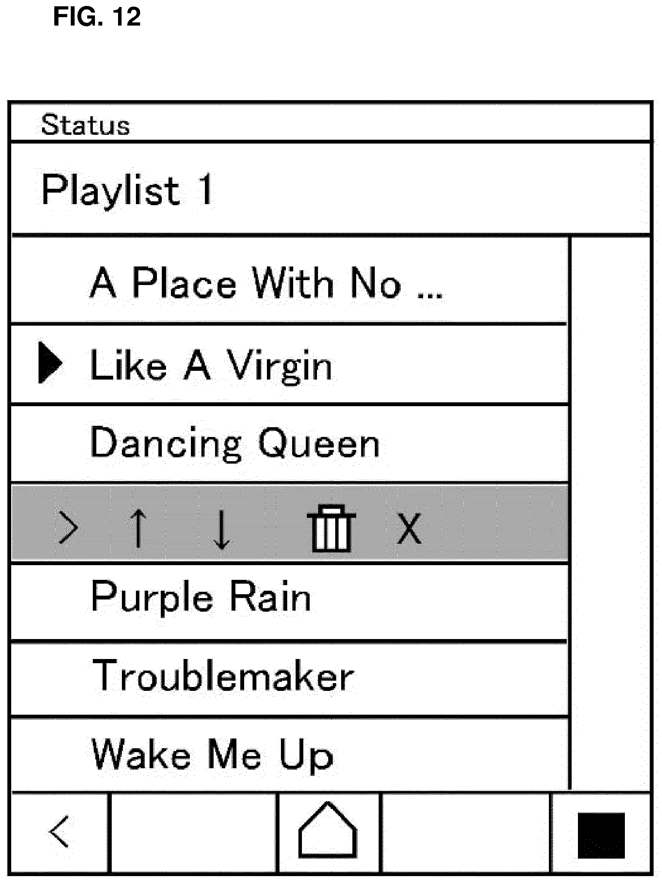

In Fig. 9, the menu is displayed on a next row of the title (A Place With No ...) of the first row. In Fig. 10, the menu is displayed on a next row of the title (Dancing Queen) of the second row. In state that is illustrated in Fig. 10, when the SoC 2 receives contact to the up arrow button, as illustrated in Fig. 11, it moves the title to a previous row. At this time, the SoC 2 moves the menu to a previous row. The SoC 2 does not display the up arrow button because the title is a first row. Further, in a state that is illustrated in Fig. 10, when the SoC 2 receives contact to the down arrow button, as illustrated in Fig. 12, it moves the title to a next row. At this time, the SoC 2 moves the menu to a next row.

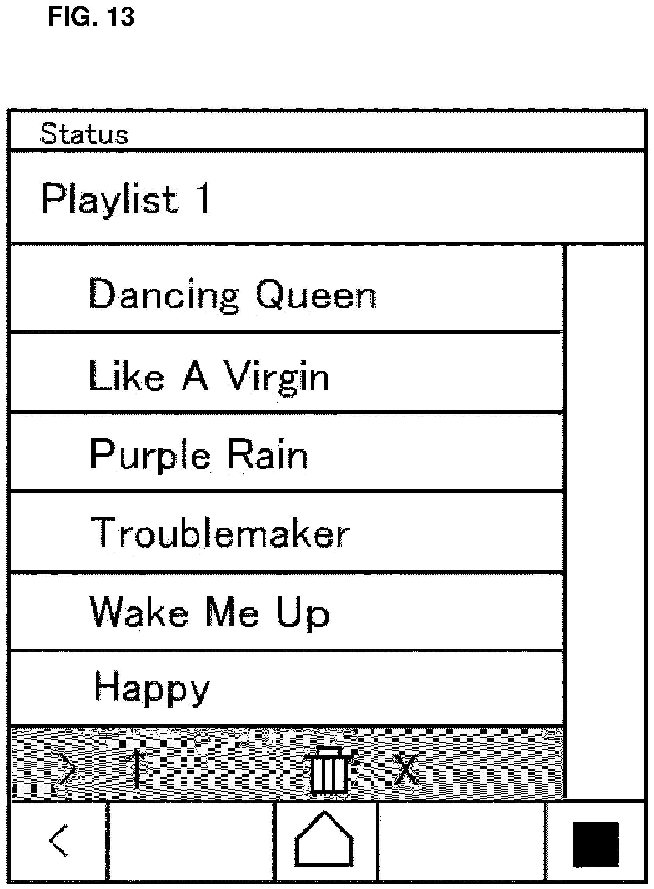

Further, as illustrated in Fig. 13, when the title is a last row, the SoC 2 does not display the down arrow button. The title cannot be moved because the title is a last row.

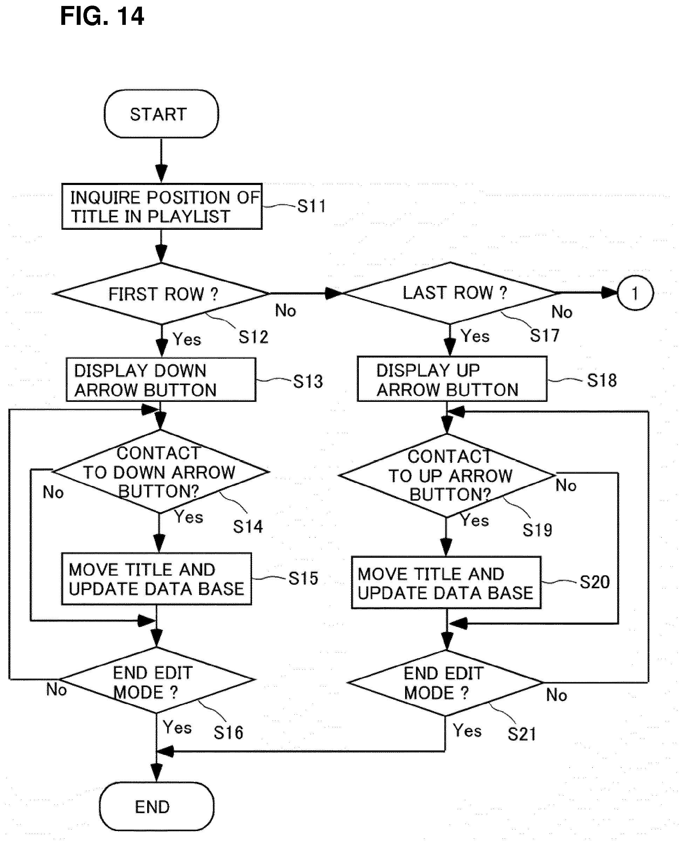

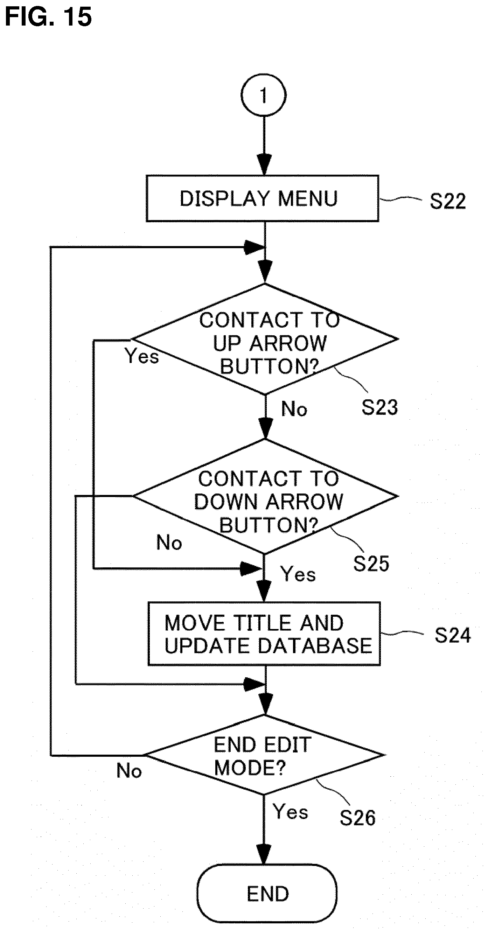

Processing operation in the case where the DAP 1 edits the playlist is described in flowcharts of Fig. 14 and Fig. 15 below. When the SoC 2 receives selection of the edit mode, namely, receives contact to the title, it inquires position of the title in the playlist to the music DB (S11). Next, the SoC 2 judges whether the title is a first row or not (S12). When the SoC 2 judges that the title is a first row (S12: Yes), it displays the down arrow button on a next row of the title (S13).

The SoC 2 judges whether it receives contact to the down arrow button or not (S14). When the SoC 2 judges that it receives contact to the down arrow button (S14: Yes), it moves the title to a next row and updates the music DB (S15). When the SoC 2 judges that it does not receive contact to the down arrow button (S14: No), or after processing of S15, it judges whether it receives contact to the X button or contact to the margin and ends the edit mode or not (S16). When the SoC 2 judges that it does not end the edit mode (S16: No), it performs processing of S14. When the SoC 2 judges that it ends the edit mode (S16: Yes), it ends processing.

When the SoC 2 judges that the title is not a first row (S12: No), it judges whether the title is a last row or not (S17). When the SoC 2 judges that the title is a last row (S17: Yes), it displays the up arrow button on a next row of the title (S18). The SoC 2 judges whether it receives contact to the up arrow button or not (S19). When the SoC 2 judges that it receive contact to the up arrow button (S19: Yes), it moves the title to a previous row and updates the music DB (S20). When the SoC 2 judges that it does not receive contact to the up arrow button (S19: No) or after processing of S20, it judges whether it receives contact to the X button or contact to the margin and ends the edit mode or not (S21). When the SoC 2 judges that it does not end the edit mode (S21: No), it performs processing of S19. When the SoC 2 judges that it ends the edit mode (S21: Yes), it ends processing.

When the SoC 2 judges that the title is not a last row (S17: No), it displays the menu on a next row of the title (S22). The SoC 2 judges whether it receives contact to the up arrow button or not (S23). When the SoC 2 judges that it receives contact to the up arrow button (S23: Yes), it moves the title to a previous row (S24). When the SoC 2 judges that it does not receive contact to the up arrow button (S23: No), it judges whether it receives contact to the down arrow button (S25). When the SoC 2 judges that it receives contact to the down arrow button (S25: Yes), it moves the title to a next row (S24). When the SoC 2 judges that it does not receive contact to the down arrow button (S25: No) or after processing of S24, it judges whether it receives contact to the X button or contact to the margin and ends the edit mode or not (S26). When the SoC 2 judges that it does not end the edit mode (S26: No), it performs processing of S23. When the SoC 2 judges that it ends the edit mode (S26: Yes), it ends processing.

As described above, in the first and the second embodiments, when the SoC 2 receives contact to the title by the touch panel 51, it displays the menu that is for moving the title on the display section 4. Thus, the SoC 2 can receive contact to the menu by the touch panel 51 and move an item. Like this, according to the present embodiment, the title can be moved by not using drag and drop, and animation.

Further, in the second embodiment, when the title that contact is received is a first row, the SoC 2 changes display mode of the up arrow button and dose not display the up arrow button. Thus, the user understands that the up arrow button cannot be selected.

Further, in the second embodiment, when the title that contact is received is a last row, the SoC 2 changes display mode of the down arrow button and dose not display the down arrow button. Thus, the user understands that the down arrow button cannot be selected.

The embodiment of the present invention is described above, but the mode to which the present invention is applicable is not limited to the above embodiment and can be suitably varied without departing from the scope of the present invention.

In the above mentioned second embodiment, when the title is a first row, the SoC 2 does not display the up arrow button. Not limited to this, as change of display mode, the SoC 2 may indicate that the user cannot select the up arrow button by performing gray out display of the up arrow button, display of slash (/ or \)on the up arrow button, or display of X on the up arrow button.

In the above mentioned second embodiment, when the title is a first row, the SoC 2 does not display the down arrow button. Not limited to this, as change of display mode, the SoC 2 may indicate that the user cannot select the down arrow button by performing gray out display of the down arrow button, display of slash (/ or \)on the down arrow button, or display of X on the down arrow button.

In the above mentioned second embodiment, the SoC 2 displays the menu on a next row of the title. Not limited to this, the SoC 2 may display the menu on another row of the title, for example, the SoC 2 may display the menu on a previous row of the title.

In the above mentioned embodiment, the SoC 2 displays the playlist of songs (titles). Not limited to this, the SoC 2 may display items such as book marks by list. Therefore, a device that functions as a display device may be a smartphone, a tablet PC or the like other than a DAP.

### INDUSTRIAL APPICABILITY

The present invention can be suitably employed in a display device that displays items by list and a control program of the display device.

### DESCRIPTION OF REFFERENCE SIGNS

- 1: DAP (display device)
- 2: SoC (controller)
- 3: storage section
- 4: display section
- 5: operation section
- 51: touch panel

## Claims

1. A display device comprising:
a display section;
a touch panel; and
a controller,
wherein the controller displays items by list,
and displays a menu that is for moving the item on the display section when it receives contact to the item by the touch panel.

2. The display device according to claim 1,
wherein the controller displays the menu on the item.

3. The display device according to claim 1,
wherein the controller displays the menu on another row of the item.

4. The display device according to claim 3,
wherein the controller displays the menu on a next row of the item.

5. The display device according to any one of claims 1 to 4,
wherein the controller displays the menu including a first button that is for moving the item to a previous row and a second button that is for moving the item to a next row on the display section.

6. The display device according to claim 5,
wherein the controller changes display mode of the first button when the item that contact is received is a first row.

7. The display device according to claim 5 or 6,
wherein the controller changes display mode of the second button when the item that contact is received is a last row.

8. The display device according to any one of claims 5 to 7,
wherein the controller moves the item to a previous row when it receives contact to the first button.

9. The display device according to claim 8,
wherein the controller moves the menu to a previous row in addition to the item when it receives contact to the first button.

10. The display device according to claim 8 or 9,
wherein the controller displays error when it receives contact to the first button and the item is a first row.

11. The display device according to any one of claims 5 to 7,
wherein the controller moves the item to a next row when it receives contact to the second button.

12. The display device according to claim 11,
wherein the controller moves the menu to a next row in addition to the item when it receives contact to the second button.

13. The display device according to claim 11 or 12,
wherein the controller displays error when it receives contact to the second button and the item is a last row.

14. A control program of a display device which comprises a display section, a touch panel, and a controller,
wherein the control program allows the controller to display items by list, and to display a menu that is for moving the item on the display section when the controller receives contact to the item by the touch panel.
